# EUROPEAN PATENT APPLICATION

(11) **EP 4 685 858 A1**
(43) Date of publication of application: **28.01.2026**
(21) Application number: 24874939.2
(22) Date of filing: 02.10.2024
(51) Int. Cl.: H01M 4/04, B65H 43/04, G06Q 50/04, G01B 7/004

(54) **SECONDARY BATTERY MANUFACTURING SYSTEM AND SECONDARY BATTERY MANUFACTURING METHOD**

(30) Priority: 06.10.2023 KR 20230133139
(71) Applicant: LG Energy Solution, Ltd., Seoul 07335 (KR)
(72) Inventor: KIM, Do Won, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/014952
(87) International publication number: WO 2025/075383

(57) **Abstract**

Example embodiments provide a secondary battery manufacturing method. The secondary battery manufacturing method includes: loading coordinate-related inspection data and coordinate-related raw inspection data of an electrode sheet, in which the coordinate-related inspection data includes an image and a coordinate of a part of the electrode sheet, and the coordinate-related raw inspection data includes a judgment on whether the part of the electrode sheet includes a surface defect and the coordinate of the part of the electrode sheet; and monitoring matching between the coordinate-related inspection data and the coordinate-related raw inspection data.

## Description

### [Technical Field]

The present invention relates to a secondary battery manufacturing system and a secondary battery manufacturing method. The present application claims the benefit of priority based on Korean Patent Application No. 10-2023-0133139, filed on October 6, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a secondary battery manufacturing system with improved traceability and a secondary battery manufacturing method.

### [Technical Solution]

Example embodiments of the present invention provide a secondary battery manufacturing method. The secondary battery manufacturing method includes: loading coordinate-related inspection data and coordinate-related raw inspection data of an electrode sheet, in which the coordinate-related raw inspection data includes an image and a coordinate of a part of the electrode sheet, and the coordinate-related inspection data includes a judgment on whether the part of the electrode sheet includes a surface defect and the coordinate of the part of the electrode sheet; and monitoring matching between the coordinate-related inspection data and the coordinate-related raw inspection data.

The monitoring of the matching between the coordinate-related inspection data and the coordinate-related raw inspection data may include comparing the coordinate of the part of the electrode sheet of the coordinate-related raw inspection data with the coordinate of the part of the electrode sheet of the coordinate-related inspection data.

The monitoring of the matching between the coordinate-related inspection data and the coordinate-related raw inspection data may include determining that the matching between the coordinate-related raw inspection data and the coordinate-related inspection data is normal, when a difference between the coordinate of the part of the electrode sheet of the coordinate-related raw inspection data and the coordinate of the part of the electrode sheet of the coordinate-related inspection data is in a range of allowable errors.

Each of the coordinate-related raw inspection data and the coordinate-related inspection data may include an inspector identifier (ID) indicating an inspector configured to inspect the part of the electrode sheet, and the monitoring of the matching between the coordinate-related inspection data and the coordinate-related raw inspection data may include comparing the inspector ID of the coordinate-related raw inspection data with the inspector ID of the coordinate-related inspection data.

Each of the coordinate-related raw inspection data and the coordinate-related inspection data may include sequence numbers of defects indicating an order of defects in the electrode sheet, and the monitoring of the matching between the coordinate-related inspection data and the coordinate-related raw inspection data may include comparing the sequence numbers of the defects of the coordinate-related raw inspection data with the sequence numbers of the defects of the coordinate-related inspection data.

The sequence numbers of the defects may be different for each of the inspectors.

The monitoring of the matching between the coordinate-related inspection data and the coordinate-related raw inspection data may be triggered by loading the coordinate-related inspection data and the coordinate-related raw inspection data.

Example embodiments provide a secondary battery manufacturing system. The secondary battery manufacturing system includes a server configured to load coordinate-related inspection data and coordinate-related raw inspection data of an electrode sheet and monitor matching between the coordinate-related inspection data and the coordinate-related raw inspection data, in which the coordinate-related raw inspection data includes an image and a coordinate of a part of the electrode sheet, and the coordinate-related inspection data includes a judgment on whether the part of the electrode sheet includes a surface defect and the coordinate of the part of the electrode sheet.

The monitoring of the matching between the coordinate-related inspection data and the coordinate-related raw inspection data may include comparing the coordinate of the part of the electrode sheet of the coordinate-related raw inspection data with the coordinate of the part of the electrode sheet of the coordinate-related inspection data.

The monitoring of the matching between the coordinate-related inspection data and the coordinate-related raw inspection data may include determining that the matching between the coordinate-related raw inspection data and the coordinate-related inspection data is normal, when a difference between the coordinate of the part of the electrode sheet of the coordinate-related raw inspection data and the coordinate of the part of the electrode sheet of the coordinate-related inspection data is in a range of allowable errors.

Each of the coordinate-related raw inspection data and the coordinate-related inspection data may include an inspector ID indicating an inspector configured to inspect the part of the electrode sheet, and the monitoring of the matching between the coordinate-related inspection data and the coordinate-related raw inspection data may include comparing the inspector ID of the coordinate-related raw inspection data with the inspector ID of the coordinate-related inspection data.

Each of the coordinate-related raw inspection data and the coordinate-related inspection data may include sequence numbers of defects indicating an order of defects in the electrode sheet, and the monitoring of the matching between the coordinate-related inspection data and the coordinate-related raw inspection data may include comparing the sequence numbers of the defects of the coordinate-related raw inspection data with the sequence numbers of the defects of the coordinate-related inspection data.

The monitoring of the matching between the coordinate-related inspection data and the coordinate-related raw inspection data may be triggered by loading the coordinate-related inspection data and the coordinate-related raw inspection data.

### [Advantageous Effects]

According to example embodiments of the present invention, matching between a judgement value of inspection data and raw inspection data can be automatically monitored. Accordingly, the reliability and productivity of the manufacture of a secondary battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 is a flowchart of a secondary battery manufacturing method according to example embodiments.
FIG. 3 illustrates a screen on a display device of a client device.
FIG. 4 illustrates a secondary battery manufacturing system according to other example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

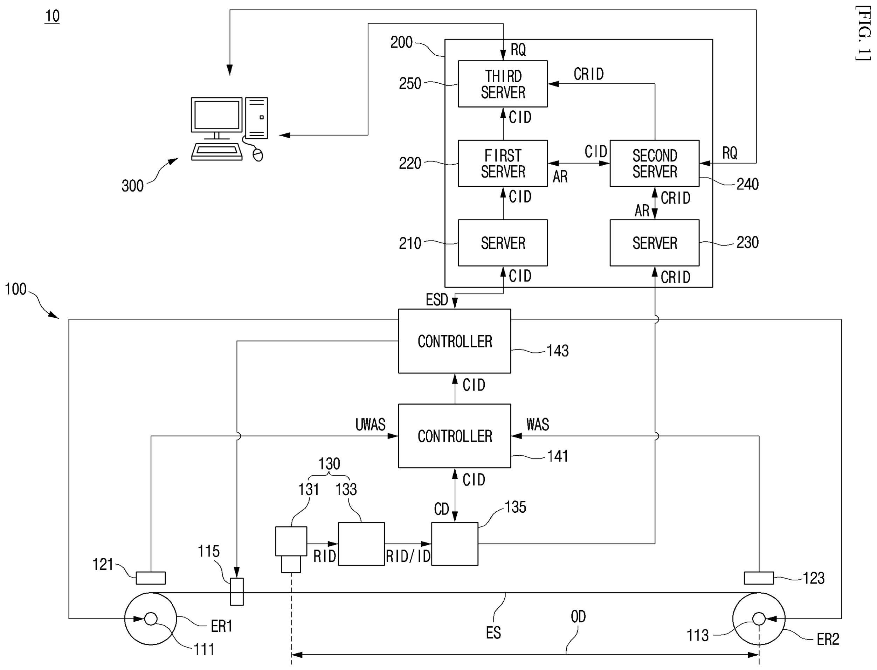

FIG. 1 illustrates a secondary battery manufacturing system 10 according to example embodiments.

Referring to FIG. 5, the secondary battery manufacturing system 10 may include a secondary battery manufacturing equipment 100, a roll map generator 200, and a client device 300.

The secondary battery manufacturing equipment 100 may be configured to perform a secondary battery manufacturing process. The secondary battery manufacturing equipment 100 may include an unwinder 111, a rewinder 113, a processing device 115, a first encoder 121, a second encoder 123, an inspector 130, a processor 135, a first controller 141, and a second controller 143.

The unwinder 111 may be configured to unwind an electrode sheet ES from a first electrode roll ER1. The rewinder 113 may be configured to wind the electrode sheet ES into a second electrode roll ER2. Accordingly, the electrode sheet ES may be moved between the unwinder 111 and the rewinder 113.

A process of manufacturing a secondary battery (e.g., an electrode process) may be performed on the electrode sheet ES. The electrode process is performed on the electrode sheet ES unwound from the first electrode roll ER1 and wound into the second electrode roll ER2 and thus may be referred to as a roll-to-roll process.

The electrode sheet ES may be processed by the processing device 115. For example, the processing device 115 may include a coater, and the electrode sheet ES may be coated with an electrode slurry. As another example, the processing device 115 may include a pressing roll, and the roll pressing process may be performed on the electrode sheet ES coated with the electrode slurry. As another example, the processing device 115 may include a splicing die and a scrap port, and a part of the electrode sheet ES may be scrapped. As another example, the processing device 115 may include a slitting knife, and the electrode sheet ES may be divided into a plurality of electrode sheets.

The coating process is a process of applying a coating material such as the electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet ES having the broad width may be cut according to the specifications of a battery cell.

The first encoder 121 may be configured to sense the amount of the electrode sheet ES unwound from the first electrode roll ER1 by the unwinder 111. Accordingly, the first encoder 121 may be configured to generate an unwinding amount signal UWAS indicating an unwinding amount of the electrode sheet ES. The first encoder 121 may be configured to transmit the unwinding amount signal UWAS1 to the first controller 141. The first controller 141 may be configured to collect input amount data, based on the unwinding amount signal UWAS of the electrode sheet ES. The input amount data may represent the amount of a material (i.e., the first electrode roll ER1) input into the secondary battery manufacturing equipment 100 to manufacture a secondary battery.

The second encoder 123 may be configured to sense the amount of the electrode sheet ES wound into the second electrode roll ER2 by the rewinder 113. Accordingly, the second encoder 123 may be configured to generate a winding amount signal WAS indicating a winding amount of the electrode sheet ES. The second encoder 123 may be configured to transmit the winding amount signal WAS1 to the first controller 141. The first controller 141 may be configured to collect exhaustion amount data, based on the winding amount signal WAS of the electrode sheet ES. The exhaustion amount data may represent production performance of the secondary battery manufacturing equipment 100.

In some cases, a part of the electrode sheet ES may be scrapped and thus the amount of the electrode sheet ES unwound by the unwinder 111 may be different from the amount of the electrode sheet ES wound by the rewinder 113. In addition, when the electrode sheet ES is stretched due to pressure in a subsequent process such as the roll pressing process, the amount of the electrode sheet ES unwound by the unwinder 111 may be different from the amount of the electrode sheet ES wound by the rewinder 113.

As a non-limiting example, the first controller 141 and the second controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to the other components of the first and second controllers 141 and 143, such as the CPU, the input interface, the output interface, the communication interface, and the memory devices, to operate the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the first and second controllers 141 and 143 or between the second controller 143 and a server 210.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The first controller 141 may be configured to collect coordinate data CD of the electrode sheet ES, based on the unwinding amount signal UWAS or the winding amount signal WAS of the electrode sheet ES. For example, the first controller 141 may determine a moving distance of the electrode sheet ES based on the winding amount signal WAS of the electrode sheet ES and thus a position of a part of the electrode sheet ES, which is to be wound by the rewinder 113, on the electrode sheet ES may be determined at each time point at which the coating process is performed. Hereinafter, the technical idea of the present invention will be described with respect to an embodiment in which the first controller 141 collects the coordinate data CD based on the winding amount signal WAS of the electrode sheet ES.

The coordinate data CD may include coordinates matching parts of the electrode sheet ES. That is, arbitrary points on the electrode sheet ES may have coordinates. The coordinates may be one-dimensional (1D) quantities in a machine direction in which the electrode sheet ES is moved (or a longitudinal direction of the electrode sheet ES) but are not limited thereto. The coordinates may be two-dimensional (2D) quantities in the machine direction and a transverse direction of the electrode sheet ES (or a width direction of the electrode sheet ES).

The inspector 130 may be configured to inspect the electrode sheet ES to collect inspection data ID. The inspector 130 may include a color sensor, an optical character reader (OCR), a bar code reader (BCR), a joint sensor, a datum point sensor, a vision machine, etc.

An example of the inspection data ID is surface defect data of the electrode sheet ES. The surface defect data may include the types of defects of the second electrode roll ER2, sequence numbers of the defect, and date and time when raw inspection data RID has been generated.

The sequence numbers of the defects may be updated in units of lots. For example, a sequence number of a first defect in the electrode sheet ES (or a first defect in the second electrode roll ER2) is 1 (or an arbitrary symbol indicating the first defect), and a sequence number of an N^{th} defect is N (or an arbitrary symbol indicating the N^{th} defect). For example, after a target winding length of the second electrode roll ER2 is reached, the second electrode roll ER2 may be cut and unloaded, and a remaining electrode sheet ES may be wound into a new second electrode roll ER2. Sequence numbers of defects in the new second electrode roll ER2 may start again from 1 (or an arbitrary symbol indicating a first defect).

Sequence numbers of defects may be different for each inspector. For example, the secondary battery manufacturing equipment 100 may include one or more additional inspectors, and sequence numbers of defects may be different for each of the inspector and the one or more additional inspectors.

Examples of surface defects may include a pinhole defect, a crater defect, a line defect, a crack defect, a side ring defect, an island defect, a folding defect, a wrinkle defect, a dent defects, and a scratch defect.

Another example of the inspection data ID is dimension data of the electrode sheet ES. The dimension data may include dimensions of the electrode sheet ES, a judgement value determined by the dimensions of the electrode sheet ES, and date and time when the raw inspection data RID has been generated to collect the dimension data of the electrode sheet ES. Here, the dimensions of the electrode sheet ES may include a width of the electrode sheet ES, a width of an insulating layer on the electrode sheet ES, an overlay that is an overlapping width between the coating material (i.e., the electrode slurry) on the electrode sheet ES and the insulating layer, and a mismatch indicating misalignment between a coated lane on a lower surface of the electrode sheet ES and a coated lane on an upper surface of the electrode sheet ES.

The inspection data ID may include data of a joint of the electrode sheet ES, data of datum points indicating positions on the electrode sheet ES, data indicating a part of the electrode sheet ES on which a sampling inspection has been performed, data of a part of the electrode sheet ES to be scraped, and data of a scraped part of the electrode sheet ES. Here, the datum points may be formed on the electrode sheet ES at certain intervals, and other elements on the electrode sheet ES may be located based on the datum points.

The inspector 130 may include a sensing part 131 and a processor 133. The sensing part 131 may be configured to sense physical quantity of the electrode sheet ES to generate a measurement signal. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The sensing part 131 may include a pressure sensor, a temperature sensor, an ultrasonic sensor, a proximity sensor, a door state sensor, a motion tracking sensor, a humidity sensor, a visible light and infrared sensor, a camera, etc.

The processor 133 may be configured to receive and process raw inspection data RID generated by the sensing part 131 to generate inspection data ID. When the inspector 130 is a vision machine, the raw inspection data RID may be an image, and the processor 133 may include an algorithm for processing an image of the electrode sheet ES (or a part of the image) to determine a judgement value of the inspection data ID and/or a model (e.g., an artificial neural network) trained to determine the judgement value based on an image of a part of the electrode sheet ES.

The generation of the inspection data ID may be triggered by the judgement value of the electrode sheet ES determined by processing the raw inspection data RID. When the judgement value of the electrode sheet ES includes a defect, the processor 133 may be configured to generate the inspection data ID and transmit the inspection data ID and the raw inspection data RID to the processor 135.

The secondary battery manufacturing equipment 100 may further include a measuring device configured to collect measurement data. The measurement data may be raw data, and evaluation and a judgement value of a part of the electrode sheet ES from which the measurement data is collected may be determined by processing the measurement data. As a non-limiting example, the measuring device may be a web gauge of Thermofisher Scientific or a thickness meter.

The measuring device may be configured to scan the electrode sheet ES. During the scanning of the electrode sheet ES, the measuring device may move in the transverse direction of the electrode sheet ES. During one scanning, the measuring device may move from one end of the electrode sheet ES in the transverse direction to another end of the electrode sheet ES in the transverse direction. While the measuring device performs scanning in the transverse direction, the electrode sheet ES may be moved in the machine direction by the unwinder 111 and the rewinder 113.

The measurement data may include numerical values collected by scanning. The measurement data may include data of a loading of a coating material on the electrode sheet ES and thickness data of the coating material on the electrode sheet ES. Here, the loading of the coating material is the amount of the coating material loaded per unit area of the electrode sheet ES and may be an area density of the coating material

The measuring device may include a sensing part and a processor. The sensing part may be configured to sense physical quantity of the electrode sheet ES to generate a measurement signal. For example, the sensing part of the measuring device may include one of the sensors described above in relation to the sensing part 131.

The processor of the measuring device may be configured to receive a measurement signal sensed by the sensing part. The processor may be configured to collect measurement data based on the measurement signal. The processor may be connected to the sensing part by wire or wirelessly. The processor may be configured to correct the measurement data by adding an offset measurement amount to each of a plurality of measured values of the measurement data. Due to the progress of a process and the aging of equipment, the measured values of the measurement data may be different from actual values. The processor may correct the measured values of the measurement data based on the offset measurement amount to improve the reliability of the roll map generator 200 and a roll map generating method. The offset measurement amount may be determined based on information about the sensing part obtained by a method such as a sample test.

The measurement data and the inspection data ID described above may be time series data. The measurement data and the inspection data ID may be temporally ordered. The measurement data and the inspection data ID may be indexed in time order. The measurement data may include measured values and a time value (or time values) matching the measured values. The inspection data ID may include inspection values and a time value (or time values) matching the inspection values. That is, the measurement data and the inspection data may be stored based on points in time when measurement and inspection are performed and may be related to time. The time values of the measurement data and the inspection data ID may be, for example, in the form of timestamp but are not limited thereto.

For example, the measurement data (e.g., data of loading on the electrode sheet ES or thickness data of the electrode sheet ES) may include a series of measured values and time values related to the series of measured values. The measured values and the time values may be matched in a one-to-one manner but are not limited thereto. The measured values may be matched to a single timestamp indicating a start point of the measurement in a many-to-one manner. As another example, defect data may include a value indicating a defect and a time value related to the value indicating the defect. Here, the value indicating the defect should be understood to mean that the value include information about at least one of the presence of the defect and the type of the defect.

The first controller 141 may be in operative communication with the first and second encoders 121, the measuring device, and additional measuring devices and inspectors through a wired or wireless data network. The data network may be unidirectional or bidirectional. The data network may be implemented by a physical channel, WiFi, public networks and/or specialized networks using Bluetooth or other frequency bands. The first and second encoders 121, the measuring device, and the additional measuring devices and inspectors may be configured to collect data from equipment, a workpiece, an intermediate product, and a product in the secondary battery manufacturing equipment 100 or to generate a signal for collecting data therefrom. The first controller 141 may be configured to transmit the coordinate data CD to the processor 133.

The processor 135 may be a type of master processor. The processor 135 may be configured to receive the inspection data ID and the raw inspection data RID from the inspector 130 and the additional inspectors and report the inspection data RID and the raw inspection data RID to an upper-level (e.g., servers 220 and 240). The processor 135 may be configured to match the inspection data ID and the raw inspection data RID to the coordinate data CD, when the inspection data ID is surface defect data and the judgement value of the inspection data ID indicates the presence of a surface defect.

According to example embodiments, the processor 135 may be configured to calibrate the coordinate data CD, based on a position of the sensing part 131S. More specifically, the measuring device may be configured to calibrate the coordinate data CD based on an offset length OD to relate coordinates of the coordinate data CD to the measured values of the measurement data.

The inspector 130 may collect measurement data of a part of the electrode sheet ES corresponding to (e.g., overlapping) the sensing part 131, and the coordinate data CD may be collected by the second encoder 123 spaced apart from the sensing part 131 as described above. Accordingly, a part of the electrode sheet ES corresponding to the coordinate data CD and a part of the electrode sheet ES corresponding to the inspection data ID and the raw inspection data RID, which are collected at the same point in time, may be different from each other.

According to example embodiments, coordinate-related inspection data CID may be provided by calibrating the coordinate data CD, which is collected at the same point in time as the measurement data, based on the offset length OD, and relating the calibrated coordinate data CD with the inspection data ID. The coordinate-related inspection data CID may include a site ID indicating a position of the secondary battery manufacturing equipment 100, a process ID indicating a process performed on the electrode sheet ES, an inspector name (or ID) for identifying an equipment ID inspector 130, a lot number of the electrode sheet ES (or a lot number of the second electrode roll ER2), the type of defect, a sequence number of the defect, and date and time when the raw inspection data RID has been generated.

A plurality of guide rolls may be interposed between the sensing part 131 and the rewinder 113 to define a moving path of the electrode sheet ES. Accordingly, the offset length OD may be defined as a length of the electrode sheet ES between the rewinder 113 and a part of the electrode sheet ES sensed by the sensing part 131. The offset length OD may be equal to or greater than a straight line distance between the sensing part 131 and the rewinder 113.

According to example embodiments, the processor 135 may be configured to match the raw inspection data RID and the coordinate data CD to provide coordinate-related raw inspection data CRID. The coordinate-related raw inspection data CRID may include a site ID, a process ID, the name of the inspector (or ID), a lot number of the electrode sheet ES (or a lot number of the second electrode roll ER2), the type of a defect, a sequence number of the defect, date and time when the raw inspection data RID has been generated, and the raw inspection data RID.

The processor of the measuring device may be configured to generate coordinate-related measurement data based on the coordinate data CD and the measurement data. The processor 131P may be configured to relate the measurement data to the coordinate data CD to generate the coordinate-related measurement data. In general, the measurement data may be processed based on a trigger point. Examples of the processing of the measurement data may include storing the measurement data, manipulating the measurement data (e.g., generating the coordinate-related measurement data), and transmitting the measurement data. As a non-limiting example, a trigger point for processing the measurement data may be the completion of scanning. The coordinate-related measurement data may include a representative value of the raw measurement data and a start coordinate and end coordinate of a section of the electrode sheet ES corresponding thereto. The coordinate-related measurement data may further include a time stamp indicating date and time when the raw measurement data has been collected, an ID of the measurement device, and an ID of equipment.

A judgement value of a plurality of sections of the electrode sheet ES may be determined by processing the measurement data by a set method. When an amount of the measured coating material on the electrode sheet ES (e.g., the loading of the coating material on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading of the coating material on the electrode sheet ES or the thickness of the electrode sheet ES) is less than the lower limit or greater than the upper limit.

As another example, a measured value (or a representative value) that is in a first range may be determined as normal, a measured value (or a representative value) that is in a second range greater than the first range may be determined as excessive, a measured value (or a representative value) that is in a third range greater than the second range may be determined as very excessive, a measured value (or a representative value) that is in a fourth range less than the first range may be determined as insufficient, and a measured value (or a representative value) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to transmit the coordinate-related inspection data CID to the first controller 141. The first controller 141 may be configured to transmit the coordinate-related inspection data CID to the second controller 143. As another example, the first controller 141 may be configured to receive the inspection data ID from the processor 135, and generate (or collect) the coordinate-related inspection data CID based on the inspection data ID and the coordinate data CD.

The first controller 141 may be configured to transmit the coordinate-related inspection data CID to the second controller 143. The second controller 143 may be configured to transmit compressed measurement data and the coordinate-related inspection data CID to the roll map generator 200. However, embodiments are not limited thereto, and the first controller 141 may directly transmit the compressed measurement data and the coordinate-related inspection data CID to the roll map generator 200.

The second controller 143 may be configured to control operations of the unwinder 111, the rewinder 113, and the processing device 115. The second controller 143 may be configured to generate a signal for operating or stopping the unwinder 111, the rewinder 113, and the processing device 115. The signal for operating or stopping the unwinder 111, the rewinder 113, and the processing device 115 may be generated based on electrode specification data ESD, the compressed measurement data, the inspection data ID, and an additional inspection signal and measurement signal.

The processor 133 may be configured to transmit the coordinate-related raw inspection data CRID to a server 230. Communication between the server 230 and the processor 135 may be a message transmission method but is not limited thereto.

The roll map generator 200 may include the servers 210, 220, 230, 240, and 250. The servers 210, 220, 230, 240, and 250 may be separate entities that perform various functions, including generating a roll map and an intermediate roll map, storing the roll map and the intermediate roll map, storing the coordinate-related raw inspection data CRID, and relaying communication among the servers 210, 220, 230, 240, and 250. Unlike that shown in FIG. 1, some of the servers 210, 220, 230, 240, and 250 may be integrated. For example, the server 220 and the server 240 may be integrated into one server, or the servers 220, 240, and 250 may be integrated into one server.

The roll map generator 200 may be configured to generate a roll map including data about the electrode sheet ES. The roll map may represent the electrode sheet ES based on coordinates indicating positions on the electrode sheet ES. As described above, a secondary battery manufacturing process may be performed on the electrode sheet ES. The roll map may include data that represents a history of processes performed on the electrode sheet ES and relates to coordinates. Accordingly, the roll map enables feedback, feedforward, and tracking of a secondary battery manufacturing process as described below.

The roll map may include event data indicating events of a roll-to-roll process of the electrode sheet ES. Event data (e.g., the inspection data ID) is time-series data because it generally occurs with the progress of a process. Accordingly, data of the process events may include values indicating the events and time values matched thereto. The time series data may be temporally ordered. Temporal ordering is a main feature of time series data and should be understood as organizing events in an order in which they occur and arrive to be processed. That is, the time series data may be stored based on a point in time when an event occurs (i.e., when inspection and measurement are performed or when an action of a process is performed), and the event may be matched to time values.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., the electrode sheet ES of FIG. 1 on which the coating process, the roll press process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll map, time series data such as measurement data may be related to coordinate data CD based on the amount of movement (i.e., the amount of winding or the amount of unwinding) of the electrode sheet ES. The roll map may allow the time series data to be related with coordinate data including coordinates of the positions on workpieces, the components, the intermediate products, and the products of the real-world. Accordingly, feedforward based on generation of the roll maps and the roll maps may improve the productivity and quality of a process by digitizing and objectifying aspects of the process that depend on an operator's discretion.

Roll maps may be produced in units of lots. The electrode sheet ES may be wound into the second electrode roll ER2, and the second electrode roll ER2 may be cut and separated from the electrode sheet ES connected to the first electrode roll ER1 after a target amount of winding is reached. A lot is a production unit of the roll-to-roll process, and the second electrode roll ER2 separated from the electrode sheet ES is an example of the lot. Accordingly, the server 220 may be configured to store a roll map of a previous process. The roll map of the previous process may correspond to the first electrode roll ER1. In addition, the server 220 may be configured to generate and store a roll map of a current process. The roll map of the current process may correspond to the second electrode roll ER2.

A roll map of a preceding lot may be used to improve a process of a following lot, and this operation may be referred to as process feedback. The process feedback using the roll maps may include identifying process conditions and process parameters that cause a problem and a defect, based on data included in the roll maps.

Furthermore, as described below, the roll maps may be cumulatively generated for workpieces, intermediate products, and products of unit processes to track process history of products (e.g., battery cells, battery modules, or battery packs) on the market. For example, the battery cell may include a cell identifier ID on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in a battery cell on the market, a history of collective data of the manufacture of the battery cell may be retrieved based on the cell ID.

The coordinate-related measurement data and the coordinate-related inspection data CID may be transmitted to the server 220 via the server 210. The server 210 may be a communication server. The server 210 may be, for example, a server for log data-based communication but is not limited thereto. The server 210 may be a program for communication between the second controller 143 of manufacturing equipment and the server 220 for manufacturing management. The server 210 may be implemented by hardware as described below. A language and protocol of the server 220 may be different from a language and protocol of the second controller 143. For example, the language of the server 220 may be SQL, and the language of the second controller 143 may be a ladder diagram.

The server 210 may be configured to convert the electrode specification data ESD transmitted from the server 220 into the language of the second controller 143. In addition, the server 210 may be configured to convert the coordinate-related measurement data and the coordinate-related inspection data CID into the language of the server 220, and record the coordinate-related measurement data and the coordinate-related inspection data CID in a database of the server 220. The coordinate-related measurement data and the coordinate-related inspection data CID may be stored in a JSON format in the database of the server 220.

The electrode specification data ESD may include model information and a recipe of the electrode sheet ES. The electrode specification data ESD may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge rate of a coating die, pressure of pressure rolls, etc.

For control of a process, a communication line may be installed between the second controller 143 and the server 220 to connect the second controller 143 and the server 220 via the server 210. Accordingly, data transmission through the second controller 143 may reduce resources required for the installation of the communication line and ensure efficient data processing and management, compared to a case in which the first and second encoders 121 and 123 and the measuring device directly transmit the unwinding amount signal UWAS, the winding amount signal WAS, and the measurement signal to the first server 220 and a case in which the first controller 141 directly transmits the coordinate-related measurement data to the server 220.

The server 220 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES

According to example embodiments, the server 220 may be a data processing system that supports all activities required to manage the manufacture of a secondary battery, such as work schedule management, work instructions, quality control, and work performance aggregation. The server 220 may be, for example, a manufacturing execution system (MES). The server 220 may be configured to perform inputting, processing, outputting, and communication of data necessary to perform an electrode manufacturing process, including the coating process, the roll press process, and the slitting process.

The server 230 may be configured to store the coordinate-related raw inspection data CRID. By storing the coordinate-related raw inspection data CRID, additional analysis of a process and insight into improvement of the process may be provided based on an inspection result of the inspector 130.

The server 240 may be configured to store raw measurement data. The server 240 may be configured to load the coordinate-related inspection data CID from the server 220 and load the coordinate-related raw inspection data CRID from the server 230 in response to a request RQ from the client device 300. The server 240 may be configured to generate an API request AR to load the coordinate-related inspection data CID and the coordinate-related raw inspection data CRID from the client device 300, based on the request RQ from the client device 300.

More specifically, the request RQ may be generated by inputting search parameters for generating the API request AR. The search parameters may include a site name (or site ID) indicating a site at which equipment has been installed, a process name (or process ID) indicating a process (e.g., coating, roll pressing, slitting, or laminating and stacking), a lot ID of the electrode sheet ES (or the second electrode roll ER2), a project name (or project ID) indicating a project (or product) to be produced, and a production period.

The server 240 may be configured to transmit the API request AR to the server 220 and the server 230. The server 220 may be configured to transmit the coordinate-related inspection data CID to the server 240 in response to the API request AR from the server 240. The server 230 may be configured to transmit the coordinate-related raw inspection data CRID to the server 240 in response to the API request AR from the server 240.

The server 240 may be configured to compare and match the coordinate-related inspection data CID and the coordinate-related raw inspection data CRID with each other. The server 240 may be configured to transmit a uniform resource locator (URL) (or schema), which includes a source code for displaying the coordinate-related inspection data CID and the coordinate-related raw inspection data CRID on the client device 300, to the client device 300.

The client device 300 may access the source code for displaying the coordinate-related inspection data CID and the coordinate-related raw inspection data CRID through the URL (or schema) and thus may display comparison and matching the coordinate-related inspection data CID and the coordinate-related raw inspection data CRID with each other.

The server 240 may also be configured to store and process the coordinate-related inspection data CID of the electrode sheet ES. The server 240 may manage the quality of processing the electrode sheet ES by continuously monitoring the processing of the electrode sheet ES based on the inspection data. According to example embodiments, the server 240 may be a statical process controller (SPC). The server 240 may collect and analyze manufacturing data in almost real time to identify problematic conditions in a timely manner and provide a notification to an operator before potential problems occur.

The server 250 may be configured to store data of the servers 220, 230, and 240. The server 250 may be configured to store the coordinate-related inspection data CID and the coordinate-related raw inspection data RCID. When the server 220 is an MES and the server 240 is an SPC, storing the coordinate-related inspection data CID and the coordinate-related raw inspection data RCID for a long time may be unsuitable. The server 250 may be, for example, a data warehouse, and may store coordinate-related measurement data CMD and the coordinate-related measurement data for a long time, based on a quality guarantee period of a product or the like. Accordingly, a manufacturing process of the product can be tracked according to a life cycle of the product.

The client device 300 may transmit a request RQ for inquiring the comparing and matching of the coordinate-related inspection data CID and the coordinate-related raw inspection data CRID to the server 250. The server 250 may be configured to retrieve the coordinate-related inspection data CID and the coordinate-related raw inspection data CRID in response to the request from the client device 300. The server 250 may be configured to compare and match the coordinate-related inspection data CID and the coordinate-related raw inspection data CRID with each other. The server 250 may be configured to transmit a URL (or schema), which includes a source code for displaying the coordinate-related inspection data CID and the coordinate-related raw inspection data CRID on the client device 300, to the client device 300.

Each of the servers 240 and 250 may be configured to generate an intermediate roll map in response to a request from the client device 300. The intermediate roll map provides matching between the coordinate-related raw inspection data CRID and the coordinate-related inspection data CID. According to example embodiments, matching between the coordinate-related raw inspection data CRID and the coordinate-related inspection data CID may be automatically monitored and thus the reliability of the intermediate roll map may be improved.

The processors 133 and 135 and the servers 210, 220, 230, 240, and 250 may be implemented by hardware, firmware, software, or a combination thereof. For example, the processors 133 and 135 and the servers 210, 220, 230, 240, and 250 may include computing devices such as workstation computers, desktop computers, laptop computers, and tablet computers. The processors 133 and 135 and the servers 210, 220, 230, 240, and 250 may include a simple controller, a complex processor such as a microprocessor, a CPU, or a GPU, a processor configured by software, dedicated hardware, or firmware. The processors 133 and 135 and the servers 210, 220, 230, 240, and 250 may be implemented, for example, by a general-purpose computer or application-specific hardware such as a digital signal processor (DSP), a field programmable gate array (FPGA), or an application specific integrated circuit (ASIC).

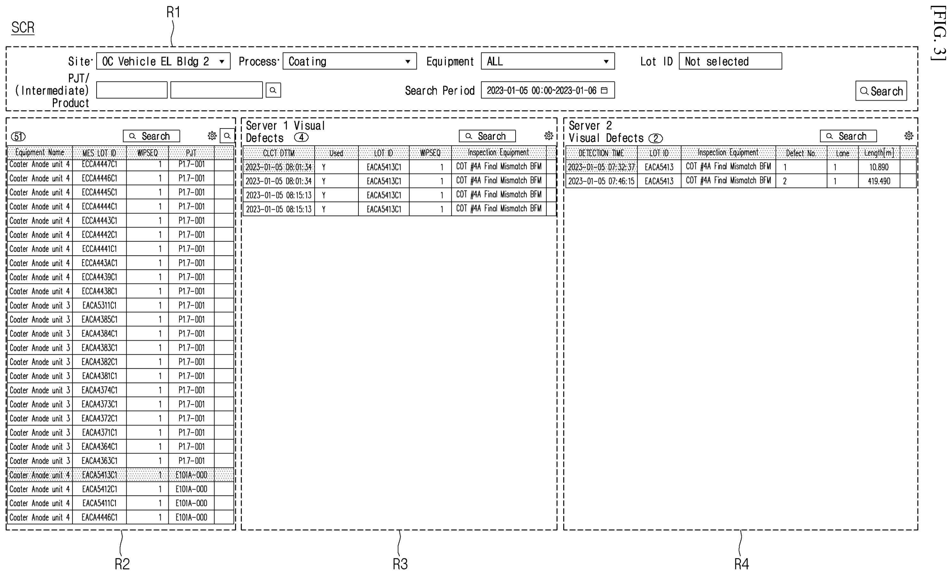

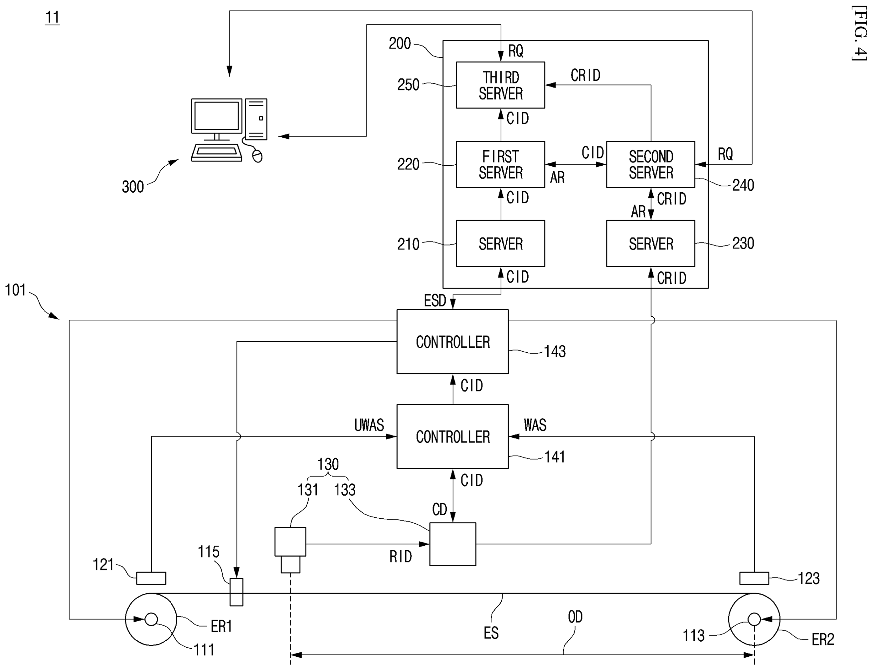

The server 220 stores and processes a large amount of data about general manufacturing management in addition to a roll map, and thus, a roll map stored in the server 220 may include simplified compressed measurement data instead of the coordinate-related measurement data CMD including raw measurement data. The server 220 may provide a roll map in response to a request from the client device 300. The client device 300 may display data d2 of an intermediate roll map as shown in FIGS. 3 and 4.

The client device 300 may be a device, e.g., a mobile device, such as a workstation computer, a laptop computer, a desktop computer, a tablet PC, or a smart phone, or a wearable device, for communication with the roll map generator 200. The client device 300 may be configured to generate a request RQ to load the coordinate-related inspection data CID and the coordinate-related raw inspection data CRID. The client device 300 may be configured to transmit requests RQ to the roll map generator 200. The client device 300 may include input tools for inputting the requests R1 and R2, and a display device displaying a screen SCR of FIG. 3 or 4.

The coordinate-related inspection data CID provides information about the occurrence of a defect but it is difficult to obtain additional insights into an analysis of the defect from the coordinate-related inspection data CID. The coordinate-related raw inspection data CRID contains information about an actual aspect of the defect and thus an analysis of the coordinate-related raw inspection data CRID is a key factor in improving yield and productivity of the manufacture of a secondary battery. According to example embodiments, the accessibility to issues occurring during the manufacture of a secondary battery may be improved by automatically checking matching between the coordinate-related inspection data CID and the coordinate-related raw inspection data CRID.

The servers 210, 220, 230, 240, and 250 may include a physical server or a cloud server. The servers 210, 220, 230, 240, and 250 may provide an operator with data and analysis results through various frameworks. A framework may include a protocol that supports data transmission to enable the client device 300 to visualize data through a user interface and provide updated visualizations as new data is calculated by the servers 220 and 230. The protocol supporting data transmission may include HTML, JavaScript, and/or JSON.

The servers 210, 220, 230, 240, and 250 may include various application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, the operations of the processors 131 and 135 and the servers 210, 220, 230, 240, and 250 may be implemented as instructions stored in a machine-readable medium that may be read and executed by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processors 133 and 135 and the servers 210, 220, 230, 240, and 250 may include firmware, software, routines, and instructions for performing the above-described operation, or a process described below. For example, the processors 133 and 135 and the servers 210, 220, 230, 240, and 250 may be instantiated in a memory.

However, this is for the sake of convenience in explanation, and the operations of the processors 133 and 135 and servers 210, 220, 230, 240, 250 may also result from computing devices, distributed computing devices, processors, firmware, software, routines, and other devices executing routines, and instructions.

The secondary battery manufacturing system 10 may implement a plug-in architecture with an API for obtaining data to provide a plug-and-play connection between the measuring device, the inspector 130 and additional measuring devices and inspectors. Accordingly, resources in a certain process step and a specific site can be easily transferred to a different process and a different site or new resources can be easily introduced into each process step and each site.

A data network between the components of the secondary battery manufacturing system 10 may include various types of communication channels, including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the roll map generator 200 may further include a manual input system that allows an operator to input manufacturing data. The roll map generator 200 may allow an operator to input data using an input tool, and a computer-based input of manufacturing data such as Excel file scrapping.

An architecture configured to generate a roll map and an intermediate roll map may be implemented by adding only the first controller 141 to elements essential in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, sensing/improvement of problematic processes, and effective introduction of new processes.

### (Second Embodiment)

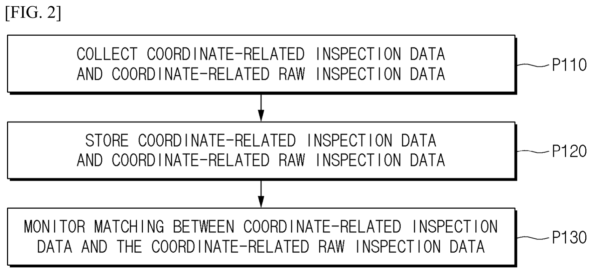

FIG. 2 is a flowchart of a secondary battery manufacturing method according to example embodiments.

Referring to FIGS. 1 and 2, in P110, coordinate-related inspection data CID and coordinate-related raw inspection data CRID may be collected. The collecting of the coordinate-related inspection data CID and the coordinate-related raw inspection data CRID may be triggered by inspection data ID indicating a surface defect on the electrode sheet ES. When the inspection data ID determined by processing raw inspection data RID indicates the presence of a surface defect, the processor 133 may transmit the raw inspection data RID and the inspection data ID to the processor 135. The processor 135 may provide the coordinate-related inspection data CID and the coordinate-related raw inspection data CRID by matching the raw inspection data RID and coordinate data CD.

Next, in P120, the coordinate-related inspection data CID and the coordinate-related raw inspection data CRID may be stored. The coordinate-related inspection data CID may be stored in the server 220, and the coordinate-related raw inspection data CRID may be stored in the server 230.

FIG. 3 illustrates the screen SCR on a display device of a client device 300.

Referring to FIGS. 1 to 3, in P130, matching between the coordinate-related inspection data CID and the coordinate-related raw inspection data CRID may be monitored. The monitoring of the matching between the coordinate-related inspection data CID and the coordinate-related raw inspection data CRID may include comparing inspector IDs, lot IDs, sequence numbers of defects, and coordinates of the coordinate-related inspection data CID and the coordinate-related raw inspection data CRID that are derived from the same part of the electrode sheet ES (i.e., derived from the same raw inspection data RID). In this case, matching the coordinates includes considering an allowable error. That is, it may be determined that the coordinate of the coordinate-related inspection data CID and the coordinate of the coordinate-related raw inspection data CRID match each other, when the difference between the coordinate of the coordinate-related inspection data CID and the coordinate of the coordinate-related raw inspection data CRID is within a range of allowable errors.

The screen SCR may include first to fourth regions R1, R2, R3, and R4. As shown in FIG. 3, the first to fourth regions R1 to R4 may be simultaneously displayed on the screen SCR, but embodiments are not limited thereto.

A user (e.g., an operator or an engineer) of the client device 300 may input search parameters to the first region R1. The search parameters may include a site ID, a process ID, an equipment ID, a lot ID, a project name, etc.

In the second region R2, coordinate-related inspection data CID and coordinate-related raw inspection data CRID that are retrieved using the search parameters are classified and listed according to lot IDs. When a user selects one of lists on the second region R2 (or selects one of the lot IDs), coordinate-related inspection data CID derived from an electrode sheet ES (or a second electrode roll ER2) corresponding to the selected lot ID may be displayed on the third region R3, and coordinate-related raw inspection data CRID derived from the electrode sheet ES (or the second electrode roll ER2) corresponding to the selected lot ID may be displayed on the fourth region R4.

The monitoring of the matching between the coordinate-related inspection data CID and the coordinate-related raw inspection data CRID may be triggered by inputting search parameters and selecting a lot ID. The matching between the coordinate-related inspection data CID and the coordinate-related raw inspection data CRID may be monitored by the server 230 or the server 250. The server 230 and the server 250 may display the matching between the coordinate-related inspection data CID and the coordinate-related raw inspection data CRID.

The server 230 and the server 250 may be configured to determine whether the inspector IDs, the sequence numbers of the defect, and the coordinates of the coordinate-related inspection data CID and the coordinate-related raw inspection data CRID match each other or not. The server 230 and the server 250 may be configured to display whether the inspector IDs, the sequence numbers of the defect, and the coordinates of the coordinate-related inspection data CID and the coordinate-related raw inspection data CRID match each other or not.

### (Third Embodiment)

FIG. 4 illustrates a secondary battery manufacturing system 11 according to other example embodiments.

Referring to FIG. 5, the secondary battery manufacturing system 11 may include a secondary battery manufacturing equipment 101, a roll map generator 200, and a client device 300.

The secondary battery manufacturing equipment 101 may be configured to perform a secondary battery manufacturing process. The secondary battery manufacturing equipment 101 may include an unwinder 111, a rewinder 113, a processing device 115, a first encoder 121, a second encoder 123, an inspector 130, a first controller 141, and a second controller 143.

That is, the secondary battery manufacturing equipment 101 may not include the processor 135 of FIG. 1. Accordingly, a processor 133 of the inspector 130 may be configured to collect coordinate-related inspection data CID and coordinate-related raw inspection data CRID, based on coordinate data CD and raw inspection data RID.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing method comprising:
loading coordinate-related inspection data and coordinate-related raw inspection data of an electrode sheet, wherein the coordinate-related raw inspection data includes an image and a coordinate of a part of the electrode sheet, and the coordinate-related inspection data includes a judgment on whether the part of the electrode sheet includes a surface defect and the coordinate of the part of the electrode sheet; and
monitoring matching between the coordinate-related inspection data and the coordinate-related raw inspection data.

2. The secondary battery manufacturing method of claim 1, wherein the monitoring of the matching between the coordinate-related inspection data and the coordinate-related raw inspection data comprises comparing the coordinate of the part of the electrode sheet of the coordinate-related raw inspection data with the coordinate of the part of the electrode sheet of the coordinate-related inspection data.

3. The secondary battery manufacturing method of claim 1, wherein the monitoring of the matching between the coordinate-related inspection data and the coordinate-related raw inspection data comprises determining that the matching between the coordinate-related raw inspection data and the coordinate-related inspection data is normal, when a difference between the coordinate of the part of the electrode sheet of the coordinate-related raw inspection data and the coordinate of the part of the electrode sheet of the coordinate-related inspection data is in a range of allowable errors.

4. The secondary battery manufacturing method of claim 1, wherein each of the coordinate-related raw inspection data and the coordinate-related inspection data comprises an inspector identifier (ID) indicating an inspector configured to inspect the part of the electrode sheet, and
the monitoring of the matching between the coordinate-related inspection data and the coordinate-related raw inspection data comprises comparing the inspector ID of the coordinate-related raw inspection data with the inspector ID of the coordinate-related inspection data.

5. The secondary battery manufacturing method of claim 1, wherein each of the coordinate-related raw inspection data and the coordinate-related inspection data comprises sequence numbers of defects indicating an order of defects in the electrode sheet, and the monitoring of the matching between the coordinate-related inspection data and the coordinate-related raw inspection data comprises comparing the sequence numbers of the defects of the coordinate-related raw inspection data with the sequence numbers of the defects of the coordinate-related inspection data.

6. The secondary battery manufacturing method of claim 5, wherein the sequence numbers of the defects are different for each of the inspectors.

7. The secondary battery manufacturing method of claim 1, wherein the monitoring of the matching between the coordinate-related inspection data and the coordinate-related raw inspection data is triggered by loading the coordinate-related inspection data and the coordinate-related raw inspection data.

8. A secondary battery manufacturing system comprising a server configured to load coordinate-related inspection data and coordinate-related raw inspection data of an electrode sheet and monitor matching between the coordinate-related inspection data and the coordinate-related raw inspection data,
wherein the coordinate-related raw inspection data comprises an image and a coordinate of a part of the electrode sheet, and
the coordinate-related inspection data comprises a judgment on whether the part of the electrode sheet includes a surface defect and the coordinate of the part of the electrode sheet.

9. The secondary battery manufacturing system of claim 8, wherein the monitoring of the matching between the coordinate-related inspection data and the coordinate-related raw inspection data comprises comparing the coordinate of the part of the electrode sheet of the coordinate-related raw inspection data with the coordinate of the part of the electrode sheet of the coordinate-related inspection data.

10. The secondary battery manufacturing system of claim 8, wherein the monitoring of the matching between the coordinate-related inspection data and the coordinate-related raw inspection data comprises determining that the matching between the coordinate-related raw inspection data and the coordinate-related inspection data is normal, when a difference between the coordinate of the part of the electrode sheet of the coordinate-related raw inspection data and the coordinate of the part of the electrode sheet of the coordinate-related inspection data is in a range of allowable errors.

11. The secondary battery manufacturing system of claim 8, wherein each of the coordinate-related raw inspection data and the coordinate-related inspection data comprises an inspector identifier (ID) indicating an inspector configured to inspect the part of the electrode sheet, and
the monitoring of the matching between the coordinate-related inspection data and the coordinate-related raw inspection data comprises comparing the inspector ID of the coordinate-related raw inspection data with the inspector ID of the coordinate-related inspection data.

12. The secondary battery manufacturing system of claim 8, wherein each of the coordinate-related raw inspection data and the coordinate-related inspection data comprises sequence numbers of defects indicating an order of defects in the electrode sheet, and
the monitoring of the matching between the coordinate-related inspection data and the coordinate-related raw inspection data comprises comparing the sequence numbers of the defects of the coordinate-related raw inspection data with the sequence numbers of the defects of the coordinate-related inspection data.

13. The secondary battery manufacturing system of claim 8, wherein the monitoring of the matching between the coordinate-related inspection data and the coordinate-related raw inspection data is triggered by loading the coordinate-related inspection data and the coordinate-related raw inspection data.
